# EUROPEAN PATENT APPLICATION

(11) **EP 1 275 703 A2**
(43) Date of publication of application: **15.01.2003**
(21) Application number: 02254858.0
(22) Date of filing: 10.07.2002
(51) Int. Cl.: C09D 11/10, C09D 133/06, C09D 151/04

(54) **Water resistant polymer composition for ink formulation**

(30) Priority: 11.07.2001 GB 0116963
(71) Applicant: SCOTT BADER COMPANY LIMITED, Wellingborough, Northamptonshire NN29 7RL (GB)
(72) Inventor: Williams, Clive Noel, Earls Barton, Northamptonshire NN6 0PG (GB); Kale, Philip Andrew, Wellingborough, Northhamptonshire NN85XT (GB)
(74) Representative: Coleiro, Raymond

(57) **Abstract**

A composition for use in an ink formulation comprises
(a) an aqueous phase having a pH of at least 7;
(b) a (meth)acrylate polymer which is a homopolymer or copolymer comprising at least 80 wt% of units derived from at least one (C₆₋₂₂ alkyl) (meth)acrylate (and, in the event that the acrylate polymer contains acid groups, which acrylate polymer, in the free acid form, has an acid number less than 75);
(c) a stabilizing polymer comprising units derived from at least one ethylenically unsaturated monomer having a group selected from a carboxylic acid, an acid anhydride thereof and a salt thereof, and which, in a free acid form thereof, has an acid number of at least 75, whereby the polymer is soluble in the aqueous phase at the pH of at least 7; and
(d) as a crosslinking agent, a water solubilizing polyvalent cation derived from a metal salt, wherein the metal is at least one of zinc and zirconium.

## Description

The present invention relates to a polymeric composition for use in the graphics industry as a print varnish or as a binder in an ink formulation, to a process for preparing a composition and to an ink formulation containing it.

Many print varnishes and ink binders are currently solvent based. However, there are considerable environmental advantages in moving to water based systems but to date, they have been unable to match in particular the water immersion and scrub test performance of the better solvent based systems. It is known generally to employ acrylic polymers which are water soluble or water swellable in a diverse range of compositions such as thickeners for thickening aqueous media (EP-A-0186361), ceramic tile adhesives (EP-A-0035353) and pressure sensitive adhesives (EP-A-0258753, EP-A-0259842 and EP-A-0386325). It is known also that for particular purposes, a certain degree of crosslinking of the acrylic polymer is desirable. For example, in EP-A-0035353, zinc ammonium carbonate is used to crosslink an acrylic polymer to render it suitable for use as a ceramic tile adhesive. Likewise, in EP-A-0186361, such crosslinking is carried out using a small amount of a multifunctional ethylenically unsaturated monomer to provide a suitable thickener. However, for use as a pressure sensitive adhesive, the acrylic polymers of EP-A-0258753, EP-A-0259842 and EP-A-0386325 are not crosslinked.

Investigations were carried out in an attempt to improve the performance of water based compositions in print varnishes and as ink binders in ink formulations in order that they may resemble more closely the properties achievable with conventional solvent based systems.

We find surprisingly that certain acrylic polymers, known previously as suitable for pressure sensitive adhesives, can be transformed by crosslinking in a particular manner into compositions which may be incorporated into a final ink formulation, for example, a print varnish, or as a binder in a printing ink formulation, so that the ink formulation may exhibit superior water resistance, good heat resistance and sufficient adhesion for the ink or varnish to be applied to non-porous or low energy surfaces.

According to one aspect of the present invention, there is provided a composition for use in an ink formulation, which composition comprises
(a) an aqueous phase having a pH of at least 7, preferably at least 7.5 and more preferably at least 8;
(b) a (meth)acrylate polymer which is a homopolymer or copolymer comprising at least 80 wt% of units derived from at least one C₆₋₂₂ alkyl (meth)acrylate (and, in the event that the acrylate polymer contains acid groups, which acrylate polymer, in the free acid form, has an acid number less than 75);
(c) a stabilizing polymer comprising units derived from at least one ethylenically unsaturated monomer having a group selected from a carboxylic acid, an acid anhydride thereof and a salt thereof, preferably an inorganic salt thereof, and which, in a free acid form thereof, has an acid number of at least 75, whereby the polymer is soluble in the aqueous phase at the pH of at least 7; and
(d) as a crosslinking agent, a water solubilizing polyvalent cation derived from a metal salt, wherein the metal is at least one of zinc and zirconium.

The term "(meth)acrylate" used herein is shorthand for "acrylate or methacrylate".

According to another aspect, the invention provides an ink formulation comprising a composition in accordance with the first aspect of the invention and (e) a colourant.

According to yet another aspect there is provided a process for preparing a composition for use in an ink formulation, which process comprises
polymerizing, preferably by emulsion polymerization, in the presence of a stabilizing polymer in an aqueous medium at a pH of at least 7, preferably at least 7.5 and more preferably at least 8, a monomer component comprising at least 80 wt% of at least one C₆₋₂₂ alkyl (meth)acrylate (and, in the event that the acrylate polymer contains acid groups, which acrylate polymer, in the free acid form, has an acid number less than 75) to form a (meth)acrylate polymer in the aqueous medium, which stabilizing polymer has an acid number of at least 75 and comprises units derived from at least one ethylenically unsaturated monomer having a group selected from a carboxylic acid, an acid anhydride thereof and a salt thereof; and
crosslinking the emulsion polymer by the addition, before, during or subsequently to polymerization, of a water solubilizing polyvalent cation derived from a metal salt, wherein the metal is at least one of a zinc and zirconium, to obtain a composition having a pH of at least 7, in which the stabilizing polymer is in solution in the aqueous medium.

An advantage associated with the preparation of the composition in a manner embodying the invention is that there is no necessity for the use of a surfactant during the process and nor is the presence of a surfactant necessary in the final product. However, as later described, such surfactants may be added, in particular when providing the final ink formulation.

Such a process, however, may still be regarded as emulsion polymerization and the (meth)acrylate polymer as an emulsion polymer.

At least 80 wt% of the monomer component providing the (meth)acrylate polymer is derived from a C₆₋₂₂ alkyl, preferably a C₈₋₂₂ alkyl, (meth)acrylate monomer. An especially preferred monomer is 2-ethylhexyl acrylate, while other examples of the monomer are isooctyl acrylate and nonyl acrylate. Preferably, the (meth)acrylate polymer is a homopolymer.

An alternative preferred monomer component comprises at least 80 wt% of a mixture of a lower, (C₆₋₉ alkyl) (meth)acrylate and a higher (C₁₀₋₂₂ alkyl) (moth)acrylate. Thus, as chain length increases, the monomer becomes more waxy and less soluble in the aqueous medium during polymerization. To compensate for this, a shorter chain monomer may be included in a proportional amount suitable for control of the solubility. The monomer 2-ethylhexyl acrylate is particularly suitable for this. Thus, a typical example is a mixture of 2-ethylhexyl acrylate and stearyl methacrylate, preferably in a weight ratio of 2-ethylhexyl acrylate and stearyl methacrylate of from 65:35 to 55:45, especially 60:40.

Although up to 20 wt% of the monomer component may comprise, as at least one modifying monomer, monomer(s) other than a C₆₋₂₂ alkyl (meth)acrylate, it is more preferred that either no modifying polymer be present or that such modifying polymer be present up to a maximum of 10%, more preferably 5%.

Thus, an especially suitable (meth)acrylate polymer is a homopolymer of 2-ethylhexyl acrylate, while other examples of monomers are isooctyl acrylate and nonyl acrylate or a copolymer of a mixture of 2-ethylhexyl acrylate and stearyl methacrylate.

When the (meth)acrylate polymer contains units derived from a modifying monomer, such monomer(s) may be at least one additional ethylenically unsaturated modifying monomer selected from optionally substituted C₁₋₅ alkyl, C₂₋₂₀ alkenyl and C₆₋₂₀ cyclic hydrocarbyl (optionally additionally including at least one hetero atom) , esters of respective C₃₋₂₀ and C₄₋₂₀ ethylenically, unsaturated mono- and polycarboxylic acids, and anhydrides and amides thereof, respective C₃₋₂₀ and C₄₋₂₀ ethylenically unsaturated mono- and polycarboxylic acids and anhydrides and amides thereof and styrenic polymers.

Preferred modifying monomers are selected from any of (i) C₁₋₅ alkyl esters of C₃₋₁₀ ethylenically unsaturated monocarboxylic acids, (ii) C₄₋₂₀ ethylenically unsaturated dicarboxylic acids and (iii) styrenic monomers.

Typically, examples are methyl, ethyl, propyl, butyl, cyclopentyl, cyclohexyl, furyl, isobornyl, hydroxyalkyl, especially hydroxyethyl, and glycidyl (meth)acrylates; (meth)acrylic acid, maleic acid or its anhydride, itaconic acid, 2-acrylamido-2-methylpropane sulphonic acid and the salts of such acids; vinyl chloride, vinylidene chloride, vinyl acetate, vinyl toluene, vinyl ester monomers (VeoVa™ series commercially available from Shell Chemical Company), (meth)acrylamide, acrylonitrile, styrene and substituted styrene such as α-methyl styrene, dichlorostyrene and dibromostyrene. Particularly favoured modifying monomers are methylmethacrylate, butylmethacrylate and styrene.

In addition or as an alternative to the abovementioned monofunctional modifying monomers, it is also possible to include multifunctional, especially difunctional, modifying monomers such as di(methyl)acrylates, divinyl benzene or allyl (meth)acrylate in order to introduce chain branching. Preferred examples of such monomers are hexanediol diacrylate and allyl methacrylate. It is recommended to use such difunctional modifying monomers in a small amount only, for example from 0.1 to 5 wt%, more preferably 0.1 to 2 and still more preferably 0.1 to 1 wt%, by weight of total monomer component to be polymerized.

It should be remembered that certain monomer combinations and/or concentrations may cause the dispersion to destabilize (for example, with a 20 wt% of the single modifying monomer methylacrylate). Alternatively, they may compromise the properties of the final compounded ink; for example, when incorporating 20 wt% of the single modifying monomer ethylacrylate, wet adhesion, for example, to polyethylene or polypropylene, and heat resistance may be impaired.

Prior to its incorporation into a composition embodying the invention, the polymer to be used as stabilizing polymer may be a polymer, preferably a copolymer, containing acid groups, and, in its free acid form, may be a hydrophobic polymer. Such polymers are available in solid form, for example in chip, flake or powder form. However, on incorporation into a composition embodying the invention, which includes an aqueous phase at a pH of at least 7, the polymer is soluble in it. Such a pH may be achieved merely by addition of an alkali, preferably an inorganic alkali such as sodium, potassium or ammonium hydroxide, ammonium hydroxide being preferred, whereby the stabilizing polymer is at least partially in salt form.

The acid groups in the stabilizing polymer are preferably provided by monomers containing carboxylic acid groups or acid anhydrides or salts thereof and the stabilizing polymer preferably additionally includes one or more polymerizable ethylenically unsaturated monomers selected from, for example, (meth)acrylic acid esters or derivatives thereof, styrene, α-methyl styrene and vinyl toluene.

Such materials are commercially available and are sometimes referred to as "let downs" in the ink industry.

In a composition embodying the invention, the stabilizing polymer preferably has a number average molecular weight in the range 500-50,000, more preferably 2,000-20,000, still more preferably 3,000-10,000, and especially 4,000-8,000.

In its free acid form, the stabilizing polymer has an acid number of at least 75, preferably at least 100 and more preferably in the range 150-250, still more preferably 180-230 and most preferably 195-215.

The amount of stabilizing polymer present in the composition is preferably from 5-50%, more preferably from 10-40% and still more preferably from 15-35%, by weight of the total weight of emulsion and stabilizing polymers.

In a composition embodying the invention, the crosslinking agent is a water solubilizing polyvalent cation derived from a metal salt, wherein the metal is at least one of zinc and zirconium. The preferred salts are the metal oxide, the metal carbonate or the metal ammonium carbonate or mixtures thereof. In particular, zinc oxide may be converted to the water soluble zinc ammonium carbonate in situ by the addition of ammonium carbonate and ammonium hydroxide. Zinc salts tend to give a better final product (ink or varnish) heat resistance whereas zirconium salts impart a better product gloss. Hence, in practice, a mixture of the two metals may be used in the crosslinking agent and a 50/50 weight ratio between the two metals gives the optimum product performance.

The amount of crosslinking agent added is preferably from 0.01 to 5%, more preferably 0.1 to 1.5%, still more preferably 0.3 to 0.7% and most preferably 0.4 to 0.6%, by weight of the total weight of emulsion and stabilizing polymers.

The composition may be prepared by emulsion polymerization of the monomer component in the presence of the stabilizing polymer at a pH of at least 7. The amount of stabilizing polymer employed is preferably from 5-50, more preferably from 10-40 and still more preferably from 15-35% by weight of total monomer component and stabilizing polymer.

Optionally, one or more surfactants may be used as an emulsifier and/or additional stabilizer for the emulsion polymerization. Such surfactants may be of anionic or nonionic character, of which many commercially available types are available, such as sodium lauryl sulphate, nonylphenyl ethoxylate and alcohol ethoxylates. The amount of surfactant, expressed as a percentage of the monomers used in the emulsion polymerization, is preferably less than 2%, more preferably less than 1% and especially preferably none at all. Indeed, it is a particular advantage of a process embodying the invention that it may be carried out without the necessity to employ a surfactant, thus enabling the resultant composition to be free from surfactants normally employed for emulsion polymerization (although certain surfactants suitable for ink formulation may be added later).

As previously indicated, the pH of the reaction mixture may be adjusted with an alkaline solution such as a sodium or potassium hydroxide, or more especially, an ammonia solution, or alternatively a primary, secondary or tertiary amine such as 2-amino-2-methyl-1-propanol, monoethanolamine, diethanolamine, triethanolamine and 2-dimethylamino-2-ethyl-1-propanol, to achieve solubility of the stabilizer.

At the time of addition of the cross-linker, at least as a result of its addition, the reaction mixture should remain alkaline. This may be achieved either by the preferred method of ensuring that the cross-linker is present before addition in a sufficiently alkaline solution, for example, by adding any of the above materials used at the start of the reaction or merely as a result of the alkaline nature of the reaction mixture. In that case, a slurry of starting materials for the cross-linker would be added to allow formation of the cross-linker in the alkaline reaction solution.

The crosslinker may be added at any stage during the polymerization process, but is preferably added at least towards the end or after polymerization of the (meth)acrylate.

Polymerization may be initiated by water soluble redox or thermal systems well known in the art and it is especially preferable to carry out the polymerization process after venting to an atmosphere of air. In particular, we found that purging with nitrogen was unnecessary.

The process of manufacture of the (meth)acrylate polymer may be by a batch, semi-batch or continuous process. In a batch process, all of the monomers are added to a single, stirred reactor at the outset. Heat is applied to raise the contents to reaction temperature and the polymerization is initiated. In a semi-batch process, some or all of the reaction monomers are added to the single, stirred reactor either continuously or incrementally during the polymerization. In a continuous process, the reactants flow through tubing, or a series of reactors, where monomers and initiators may be introduced initially or selectively in stages throughout the reaction route.

Compositions embodying the invention may be incorporated into ink formulations having superior water resistance, good heat resistance and sufficient adhesion for the ink or varnish to be applied to non-porous or low energy surfaces. Such surfaces include films, foils, plastics material, glass, ceramics and non-ferrous metals. Inks compounded from the compositions are particularly suitable for the printing of polyethylene (PE) and polypropylene (OPP) films.

Thus, we find surprisingly that compositions embodying the invention deliver new levels of wet adhesion.

Preferred embodiments of the invention will now be described in more detail with reference to the following Examples, in which the test procedures were carried out as follows.

### Test Procedures

### Water Spot

Using a K2 bar coater the binders were coated on a clean glass plate. After allowing to dry at room temperature for 15 minutes, one drop of deionised water was placed onto the film surface. The time taken for blanching or whitening and where appropriate the time for the total breakdown of the film were recorded. A time of 1 hour or more before whitening was regarded as acceptable.

### Heat Resistance

Using a K2 bar coater the binders were coated onto photocopier grade paper. The film was allowed to dry at ambient temperature for 24 hours. Strips cut from the coated paper were then heat sealed, coated side to coated side, using a Graham Lee SCl heat seal machine set at 40psi pressure and a 2 second dwell time. The temperature of the jaws was raised in 10°C increments to a maximum of 260°C. The lowest temperature at which fibre tear was noted on parting the sealed pieces of paper was taken to be the heat resistance of the polymer. A heat resistance of at least 220°C was regarded as acceptable.

### Wet Adhesion

Each substrate was coated with the sample ink using a K2 bar coater and left at ambient temperature to dry for 24 hours. Wet rub testing was carried out using a Crock Meter (available from James H. Heal & Co) loaded with a 9N weight fitted with a cotton pad at the point of contact with the substrate. The coated sample and test pad were wetted with deionised water and 100 double rubs were performed. This was repeated on a fresh, coated sample immediately after 8 hours immersion in water. Results were recorded as the percentage of the coating that had been removed after the 100 double rubs. An acceptable value for the fresh coated sample after 8 hours immersion in water was 20.

### Solids Content

The procedure was in accordance with ASTM D4758-92.

### pH

Measurements were made using a Mettler-Toledo MP220 pH meter calibrated with pH 4 and pH7 buffer solutions.

### Viscosity

A Brookfield DV-I+ viscometer was used with No 4 spindle at a speed of 100rpm.

### Particle Size

This was measured by photon correlation spectroscopy with a Malvern Zetasizer 1000 instrument.

### Example 1

### 1st Stage

| Initial Charge | |
|---|---|
| Deionised water | 441.6g |
| Morez 101 EL (polymeric stabiliser from Rohm and Haas)* | 137.5g |
| Ammonia (SG 0.88) | 26.4g |
| Ammonium Persulphate | 2.3g |
| Deionised water | 20.0g |

| Monomer Feed | |
|---|---|
| 2-Ethylhexyl acrylate | 279.1g |
| | |

| End of Stage 1 | |
|---|---|
| Tertiarybutyl hydroperoxide (70%) | 1.2g |
| Deionised water | 4.4g |
| | |
| Sodium formaldehyde sulphoxylate | 0.8g |
| Deionised water | 8.0g |

| | |
|---|---|
| *Morez 101 EL is a solid, alkali soluble, styrene acrylic resin having a molecular weight of 5700-6700, an acid number of 195-215 and a glass transition temperature of 98°C. | |

A 2 litre water-jacketed reaction flask, equipped with a condenser, temperature probe and feed vessels was charged with the polymeric stabiliser, water and ammonia. The temperature was raised to 80°C and stirred until all the polymer had dissolved. At this point, a first part of the redox system, namely the ammonium persulphate as a solution in water was added and the monomer trickle feed begun. Monomer was added steadily over a 4 hour period whilst the temperature was maintained between 82°C and 86°C. Reaction was continued for a further half hour at which point the diluted aqueous solution of tertiary butyl hydroperoxide was added. Ten minutes later, after cooling the flask contents to 60°C, the other part of the redox system, i.e. the aqueous solution of sodium formaldehyde sulphoxylate, was added. This addition was designed to remove any unreacted monomer. Temperature was maintained for a further 30 minutes before cooling to 40°C.

### 2nd Stage

| | |
|---|---|
| Ammonium Carbonate | 3.45g |
| Deionised water | 27.0g |
| Zinc Oxide | 2.85g |
| Ammonia (SG 0.88) | 5.0g |
| (Zinc Ammonium Carbonate solution | 38.30g) |
| | |
| Bacote 20 (47-52% Zirconium Ammonium Carbonate solution from MEL Chemicals Ltd) | 14.3g |
| Deionised water | 24.0g |

| End of Stage 2 | |
|---|---|
| Proxel GXL (biocide from Zeneca Biocides) | 1.0g |
| Deionised water | 1.0g |

Zinc ammonium carbonate solution was made from the components and after its formation as a clear solution, it was added to the stirred reaction vessel followed by the zirconium ammonium carbonate solution; both were added dropwise over a period of several minutes. After stirring for a final half an hour, the diluted biocide was added, dispersed and the white emulsion run out of the reactor through a 60µm filter.

Analysis of the emulsion showed the solids content to be 43%, pH 9.0, viscosity 300cps and the particle size to be 115nm.

### Example 2

As for Example 1, except that the monomer was a 80/20 wt% mixture of 2-ethylhexyl acrylate/butyl acrylate.

Analysis of the emulsion indicated the solids content to be 43%, pH 9.2, viscosity 590cps and particle size of 113nm.

### Example 3 (Comparative)

As for Example 1, except that the monomer was a 20/80 wt% mixture of 2-ethylhexyl acrylate/butyl acrylate.

Analysis of the emulsion indicated the solids content to be 43%, pH 9.2, viscosity 220cps and particle size of 74nm.

### Example 4

As for Example 1, except that the zinc ammonium carbonate and zirconium ammonium carbonate solution additions were changed to 19.2g and 21.5g respectively (plus 36g of deionised water).

Analysis of the emulsion gave a solids content of 43%, pH 8.7, viscosity 220cps and particle size of 100nm.

### Example 5

As for Example 1, except that the zinc ammonium carbonate and zirconium ammonium carbonate solution additions were changed to 57.5g and 7.1g respectively (plus 12g of deionised water).

Analysis of the emulsion gave a solids content of 43%, pH 9.1, viscosity 794cps and particle size of 102nm.

### Example 6 (Comparative)

As for Example 1, except that:
1) The monomer feed was a 20/80 wt% mixture of butyl methacrylate/butyl acrylate.
2) The amount of stabilizing resin, Morez 101EL, was reduced to 125g and the amount of ammonia to a corresponding 24g, the water being adjusted accordingly to maintain the solids content.
3) The sole crosslinker used was zinc ammonium carbonate, in an amount of 76.6g.

Analysis of the emulsion gave a solids content of 43%, pH 9, viscosity 410 cps and particle size of 100 nm.

### Example 7

As for Example 1, apart from nonyl acrylate being used as the sole monomer.

The solids content was recorded as being 43%, pH 8.9, viscosity 132cps and particle size 109nm.

### Example 8

As for Example 1, apart from the sole monomer being iso-octyl acrylate.

The solids content was 43%, pH 9.0, viscosity 188cps and particle size 108nm.

### Example 9

As for Example 1, apart from the monomers being a mixture of 2-ethylhexyl acrylate and stearyl methacrylate in a 60/40 weight ratio.

The solids content was 43%, pH 8.9, viscosity 30cps and particle size 173nm.

Examples 1-9 were compared for water spotting and heat resistance, these being measured in accordance with the test methods later described. The results are set out in Table 1.

**TABLE 1**

| **Example** | **Water Spot Whitening Delamination** | | **Heat Resistance °C** |
|---|---|---|---|
| 1 | >1hr | >1hr | >260 |
| 2 | >1hr | >1hr | 220 |
| 3 | >1hr | >1hr | <180 |
| 4 | >1hr | >1hr | 250 |
| 5 | >1hr | >1hr | 260 |
| 6 | >1hr | >1hr | 240 |
| 7 | >1hr | >1hr | 240 |
| 8 | >1hr | >1hr | 220 |
| 9 | >1hr | 1hr | >260 |

For the water spot test all examples performed well, only Example 9 showing any signs of film whitening after an hour.

For heat resistance, the composition of (comparative) Example 3, in which the (meth)acrylate polymer contained too little of the long chain acrylate, showed too low a heat resistance, while the compositions of all other Examples showed much higher resistance, although, as can be seen from Examples 1-6, the heat resistance depended to some extent upon the nature of the modifying monomer.

### Examples 10-18

The binder emulsions produced from Examples 1-9, were incorporated into the ink formulation below.

| | Parts by weight |
|---|---|
| 10% of DOW 6 in deionised water (antifoam from Dow) | 20 |
| Deionised water | 87 |
| Unisperse GPA blue dispersion (from CIBA) | 240 |
| Emulsion binder | 540 |
| Aquacer 531 (wax emulsion from Byk) | 50 |
| Aerosol OT-75 (anionic surfactant from Cyanamid) | 3 |
| Isopropanol | 40 |
| Surfynol 104 DPM (nonionic surfactant from Air Products) | 20 |
| Total | 1000 |

Components were blended together in the above order with a low shear mixer. The inks were evaluated on two different substrates:
1) Corona treated PE sheet from British Polythene Industries.
2) Corona treated PPO sheet grade GND 30 from Hoechst Trespaphan.

The wet adhesion for ink formulations containing the respective compositions of Examples 1-9 was tested in each case by the Test Procedures previously described and the results set out in Table 2.

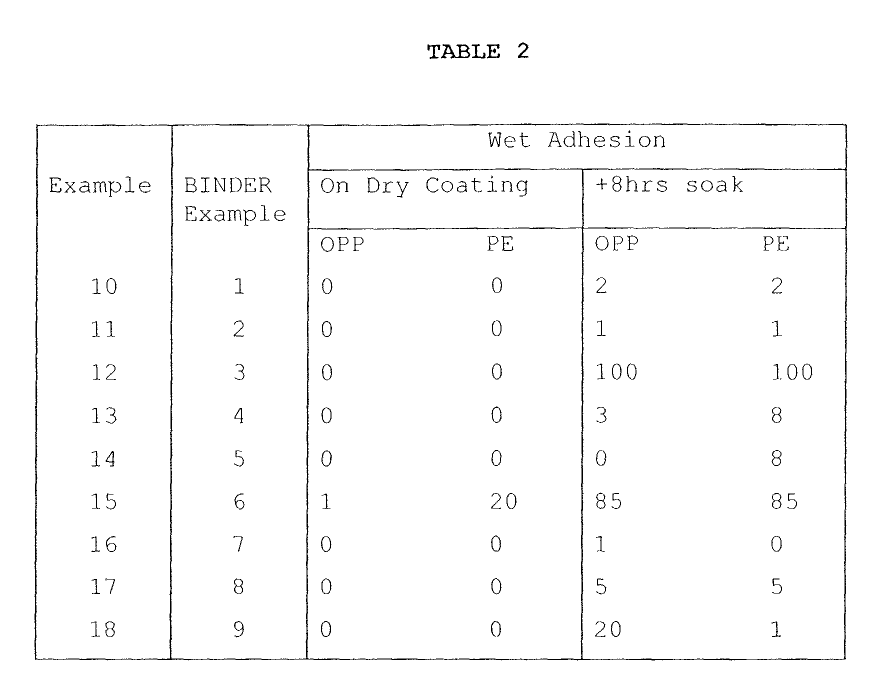

As can be seen from Table 2, the compositions of Example 12, containing the Binder Example 3 (comparative), in which the (meth)acrylate polymer contained too small an amount of long chain acrylate, and Example 15, containing the Binder Example 6 (comparative), in which the (meth)acrylate polymer did not contain any long chain (meth)acrylate, both showed poor water resistance, especially in the test repeated after 8 hours. In contrast, by comparison with the compositions of the comparative Examples, all compositions embodying the invention displayed excellent water resistance.

Thus, it can be seen that compositions embodying the invention can be incorporated into an ink formulation having excellent water resistance, on a level far higher than known compositions, while maintaining at least an acceptable heat resistance.

## Claims

1. A composition for use in an ink formulation, which composition comprises
(a) an aqueous phase having a pH of at least 7;
(b) a (meth)acrylate polymer which is a homopolymer or copolymer comprising at least 80 wt% of units derived from at least one (C₆₋₂₂ alkyl) (meth)acrylate (and, in the event that the acrylate polymer contains acid groups, which acrylate polymer, in the free acid form, has an acid number less than 75);
(c) a stabilizing polymer comprising units derived from at least one ethylenically unsaturated monomer having a group selected from a carboxylic acid, an acid anhydride thereof and a salt thereof, and which, in a free acid form thereof, has an acid number of at least 75, whereby the polymer is soluble in the aqueous phase at the pH of at least 7; and
(d) as a crosslinking agent, a water solubilizing polyvalent cation derived from a metal salt, wherein the metal is at least one of zinc and zirconium.

2. A composition according to claim 1, wherein the pH of the aqueous phase is at least 8.

3. A composition according to claim 1 or claim 2, wherein the (meth)acrylate polymer is a homopolymer or copolymer comprising at least 80 wt% of units derived from at least one (C₈₋₁₈ alkyl) (meth)acrylate.

4. A composition according to claim 3, wherein at least 80 wt% of the units of the (meth)acrylate polymer are derived from a monomer selected from 2-ethylhexyl acrylate, isooctyl acrylate and nonyl acrylate.

5. A composition according to claim 4, wherein at least 80 wt% of the units of the (meth)acrylate polymer are derived from 2-ethylhexyl acrylate.

6. A composition according to claim 3, wherein the (meth)acrylate polymer is a homopolymer.

7. A composition according to claim 1, wherein at least 80 wt% of the units of the (meth)acrylate polymer are derived from a mixture of a lower (C₆₋₉ alkyl) (meth)acrylate and a higher, (C₁₀₋₂₂ alkyl) (meth)acrylate for control of solubility of the monomer in the aqueous medium during the preparation thereof.

8. A composition according to claim 7, wherein the lower, (C₆₋₉ alkyl) (meth)acrylate is 2-ethylhexyl acrylate.

9. A composition according to claim 7 or claim 8, wherein the higher, (C₁₀₋₂₂ alkyl) (meth)acrylate is stearyl acrylate.

10. A composition according to any one of claims 1 to 5, 7 and 9, wherein the (meth)acrylate polymer is a copolymer additionally comprising units derived from at least one ethylenically unsaturated modifying monomer selected from optionally substituted C₁₋₅ alkyl, C₂₋₂₀ alkenyl and C₆₋₂₀ cyclic hydrocarbyl (optionally additionally including at least one hetero atom) esters of respective C₃₋₂₀ and C₄₋₂₀ ethylenically, unsaturated mono- and polycarboxylic acids, and anhydrides and amides thereof, respective C₃₋₂₀ and C₄₋₂₀ ethylenically unsaturated mono- and polycarboxylic acids and anhydrides and amides thereof and styrenic polymers.

11. A composition according to claim 10, wherein the copolymer contains units of at least one said modifying monomer selected from any of (i) C₁₋₅ alkyl esters of C₃₋₁₀ ethylenically unsaturated monocarboxylic acids, (ii) C₄₋₂₀ ethylenically unsaturated dicarboxylic acids and (iii) styrenic monomers.

12. A composition according to claim 11, wherein the additional units are derived from methyl methacrylate, butyl methacrylate or styrene.

13. A composition according to any preceding claim, wherein the stabilizing polymer has an acid number of at least 100.

14. A composition according to claim 13, wherein the stabilizing polymer, in a free acid form thereof, has an acid number of 195-215.

15. A composition according to any preceding claim, wherein the stabilizing polymer additionally comprises units derived from at least one monomer selected from (meth)acrylic acid esters, styrene, α-methyl styrene and vinyl toluene.

16. A composition according to any preceding claim, wherein the crosslinking agent is a mixture of zinc ammonium carbonate and zirconium ammonium carbonate.

17. A composition according to any preceding claim, which is free from surfactant.

18. A process for preparing a composition for use in an ink formulation, which process comprises
polymerizing, in the presence of a stabilizing polymer in an aqueous medium at a pH of at least 7, a monomer component comprising at least 80 wt% of at least one C₆₋₂₂ alkyl (meth)acrylate (and, in the event that the acrylate polymer contains acid groups, which acrylate polymer, in the free acid form, has an acid number less than 75); to form a (meth)acrylate polymer in the aqueous medium, which stabilizing polymer comprises units derived from at least one ethylenically unsaturated monomer having a group selected from a carboxylic acid, an acid anhydride thereof and a salt thereof and having, in a free acid form thereof, an acid number of at least 75; and
crosslinking the (meth)acrylate polymer by the addition, before, during or subsequently to polymerization, of a water solubilizing polyvalent cation derived from a metal salt, wherein the metal is at least one of zinc and zirconium, to obtain a composition having a pH of at least 7, in which the stabilizing polymer is in solution in the aqueous medium.

19. A process according to claim 18, which is carried out in the absence of a surfactant.

20. An ink formulation comprising
(a) an aqueous phase having a pH of at least 7;
(b) a (meth)acrylate polymer which is a homopolymer or copolymer comprising at least 80 wt% of units derived from at least one C₆₋₂₂ alkyl (meth)acrylate (and, in the event that the acrylate polymer contains acid groups, which acrylate polymer, in the free acid form, has an acid number less than 75);
(c) a stabilizing polymer comprising units derived from at least one ethylenically unsaturated monomer having a group selected from a carboxylic acid, an acid anhydride thereof and a salt thereof, and having, in a free acid form thereof, an acid number of at least 75 whereby the polymer is soluble in the aqueous phase at the pH of at least 7; and
(d) as a crosslinking agent, a water solubilizing polyvalent cation derived from a metal salt, wherein the metal is at least one of zinc and zirconium; and
(e) a colourant.
